Europäisches Patentamt

European Patent Office

Office européen des brevets

(11) Veröffentlichungsnummer: **0 221 323**

**A1**

(12) # EUROPÄISCHE PATENTANMELDUNG

(21) Anmeldenummer: **86113167.0**

(22) Anmeldetag: **24.09.86**

(51) Int. Cl.4: **G01N 23/04** , G01V 5/00

(30) Priorität: **08.10.85 DE 3535913**

(43) Veröffentlichungstag der Anmeldung:
**13.05.87 Patentblatt 87/20**

(84) Benannte Vertragsstaaten:
**BE DE FR GB**

(71) Anmelder: **Heimann GMBH**
**Weher Köppel 6**
**D-6200 Wiesbaden 1(DE)**

(72) Erfinder: **Dönges, Gerhard, Dipl.-Ing.**
**Am Markt 1**
**D-6209 Heidenrod(DE)**

(74) Vertreter: **Mehl, Ernst, Dipl.-Ing. et al**
**Postfach 22 01 76**
**D-8000 München 22(DE)**

(54) **Gepäckprüfanlage.**

(57) Die Erfindung betrifft eine Gepäckprüfanlage mit Röntgenstrahler (1) und zeilenförmigem Strahlendetektor (4). Am Ausgang jedes Einzeldetektors (4a, 4b usw.) ist eine Subtraktionsstufe (12) mit einem Speicher (7) angeschlossen, in dem das jeweilige Nullsignal abspeicherbar und anschließend vom Gesamtsignal subtrahierbar ist. Dadurch kann die Anlage mit sehr niedriger Dosisleistung und damit offener Prüfkammer betrieben werden.

FIG 3

EP 0 221 323 A1

## Gepäckprüfanlage

Die Erfindung betrifft eine Gepäckprüfanlage mit einer Transportstrecke für das Prüfgut, auf deren einer Seite ein Strahler für durchdringende Strahlung und auf deren anderer Seite ein Strahlendetektor angeordnet ist, der von einer Reihe von Einzeldetektoren gebildet ist, sowie mit einer den Einzeldetektoren nachgeschalteten Signalverarbeitungsschaltung.

Es sind Strahlendetektoren für Gepäckprüfanlagen bekannt, die aus Fotodiodenzeilen bestehen, wobei jeder Fotodiode je ein Szintillator zugeordnet ist. Jedem Einzeldetektor, der demgemäß aus einem Szintillator und einer Fotodiode besteht, ist dabei jeweils ein Verstärker nachgeschaltet. Über analoge Multiplexer können die Meßwerte seriell ausgelesen werden. Jeder Kanal weist ein Null-Signal auf (Strahler ausgeschaltet), das bei den bekannten Anlagen in der Größenordnung des Nutzsignales liegt.

Bei den bekannten Gepäckprüfanlagen ist eine geschlossene Meßkammer vorgesehen, um unzulässige Primär- und Streustrahlung von Personen in der Umgebung der Anlage fernzuhalten. Das Prüfgut wird von einer Fördereinrichtung durch die als Tunnel ausgeführte Kammer bewegt. Die Tunnelöffnungen können zum Abschluß der Kammer mit Bleivorhängen verschlossen sein.

Eine geschlossene Meßkammer hat für den Betriebsablauf erhebliche Nachteile:

Das Prüfgut bleibt während des Durchlaufes nicht sichtbar; ein Einblick in die Meßkammer ist nur mit teueren Bleiglasscheiben möglich.

Bleivorhänge behindern den Durchlauf des Prüfgutes; leichtes Prüfgut kann hängen bleiben; Gepäckstücke können umkippen und beschädigt werden.

Offene Meßkammern sind nur bei Gepäckprüfanlagen möglich, die nach dem Flying Spot-Prinzip arbeiten. Dabei wird ein nadelförmiger Röntgenstrahl von einer rotierenden Blende erzeugt, der das Prüfgut abtastet. Anlagen, die nach diesem Prinzip arbeiten, weisen aber eine hohe Generatorbelastung durch geringe Ausnutzung und anfällige Mechanik auf.

Der Erfindung liegt die Aufgabe zugrunde, eine Gepäckprüfanlage der eingangs genannten Art so auszubilden, daß bei Verwendung von Halbleiterdioden mit vorgeschalteten Szintillatoren als Einzeldetektoren eine offene Meßkammer realisierbar ist.

Diese Aufgabe ist erfindungsgemäß dadurch gelöst, daß die Ausgänge der Einzeldetektoren an einer Subtraktionsstufe mit einem Speicher angeschlossen sind, in dem das jeweilige Nullsignal abspeicherbar und anschließend vom Gesamtsignal subtrahierbar ist. Bei der erfindungsgemäßen Gepäckprüfanlage wird das Ausgangssignal jedes Einzeldetektors in einer individuellen Vorkompensationsstufe in der Weise weiterverarbeitet, daß vom Gesamtsignal das jeweilige Nullsignal abgezogen wird. Dem nachgeschalteten Zeilensignalprozessor wird demgmeäß nur das Nutzsignal zugeführt.

Die Erfindung ist nachfolgend anhand der Zeichnung näher erläutert. Es zeigen:

Fig. 1 und 2 zeitliche Signalverläufe zur Erläuterung des Erfindungsgedankens, und

Fig. 3 eine Darstellung einer Gepäckprüfanlage nach der Erfindung.

Gepäckprüfanlagen mit Fotodiodenzeilen, bei denen jeweils ein Szintillator vor jeder Fotodiode liegt, weisen eine Vielzahl von Einzeldetektoren aus je einer Fotodiode und einem Szintillator, z.B. 500 solcher Einzeldetektoren, auf, denen jeweils ein Verstärker nachgeschaltet sein kann. Über analoge Multiplexer werden die Meßwerte seriell ausgelesen. Jeder Kanal liefert ein Nullsignal, das bei den bekannten Anlagen in der Größenordnung des Nutzsignales liegt.

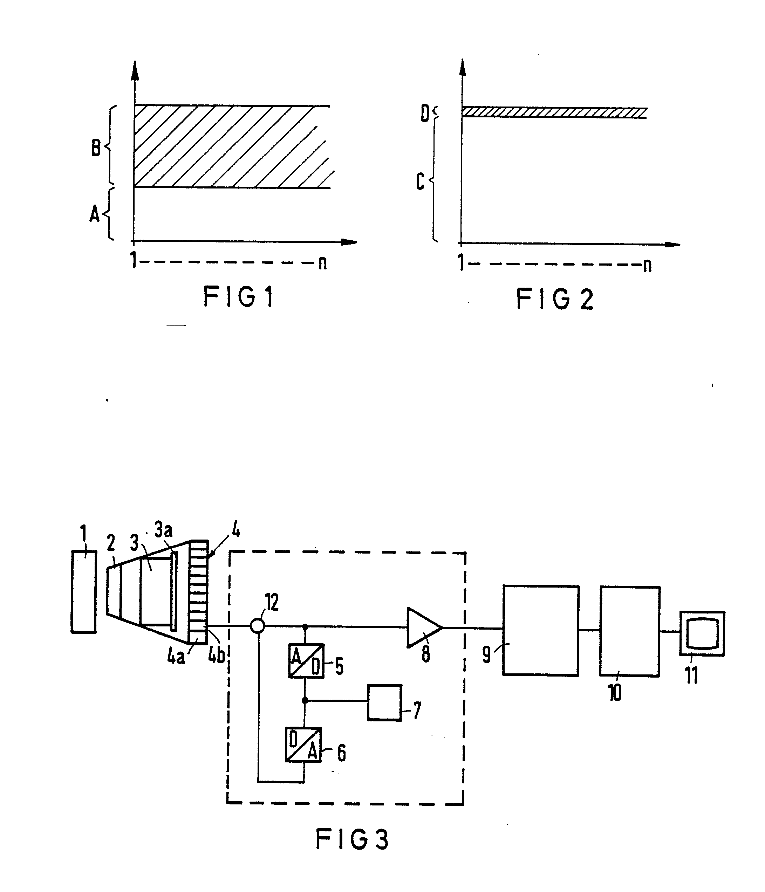

In der Figur 1 ist mit A das Nullsignal und mit B das Nutzsignal einer bekannten Gepäckprüfanlage der geschilderten Art dargestellt. Auf der Abszisse sind dabei die Einzeldetektoren 1 bis n aufgetragen.

Um die Meßkammer einer Gepäckprüfanlage offen betreiben zu können, muß die Dosisleistung des Strahlers gegenüber den Verhältnissen der Figur 1 auf ein Zehntel reduziert werden. Damit ist eine Verminderung des Nutzsignales in gleichem Maße verbunden. Die Figur 2 zeigt diese Verhältnisse. Das Nullsignal C ist nunmehr gegenüber dem Nutzsignal D erheblich größer.

Muß der zulässige Umgebungstemperaturbereich auf über 50° C erweitert werden, so ist mit einem Nullsignalanteil zu rechnen, der das Zwanzig- bis Fünfzigfache des Nutzsignales beträgt.

In der Figur 3 ist mit 1 ein Röntgenstrahler, mit 2 ein nachgeschalteter Kollimator, mit 3 das Prüfgut, das auf einer Transportstrecke 3a liegt, und mit 4 ein Strahlendetektor, der aus einer Reihe von Einzeldetektoren 4a, 4b usw. besteht, bezeichnet. Dem Strahlendetektor 4 sind ein Zeilensignalprozessor 9, ein digitaler Bildspeicher 10 und ein Videomonitor 11 nachgeschaltet. Auf dem Videomonitor 11 erscheint das Bild desjenigen Bereiches des Prüfgutes 3, der gegenüber dem fächerförmigen Röntgenstrahlenbündel des Röntgenstrahlers 1 bewegt wird.

Wesentlich für die Erfindung ist die gestrichelt eingezeichnete Elektronik für jeden Detektorkanal mit einer Subtraktionsstufe 12, einem A/D-Wandler 5, einem D/A-Wandler 6, einem Signalspeicher 7 und einem Verstärker 8.

Bei ausgeschaltetem Röntgenstrahler 1 werden die Nullsignale mittels des A/D-Wandlers 5 niedriger Auflösung digitalisiert, im Speicher 7 abgespeichert und anschließend bei eingeschaltetem Röntgenstrahler 1 über den D/A-Wandler 6 analogseitig vom Gesamtsignal subtrahiert. Der verbleibende Rest des Nullsignales wird vom Zeilensignalprozessor 9 kompensiert.

Die dargestellte Schaltung hat gegenüber dem Einsatz eines A/D-Wandlers hoher Auflösung im Zeilensignalprozessor 9 zur Subtraktion des Nullsignales vom Gesamtsignal folgende Vorteile:

Die Schaltung aus A/D-Wandler 5, Speicher 7 und D/A-Wandler 6 ist um eine Größenordnung billiger als ein einziger Wandler im Zeilensignalprozessor 9 mit hoher Auflösung.

Die zur Bilderzeugung herangezogenen Signalamplituden werden nie so klein, daß Störprobleme auftreten können.

Die Dynamik der zweistufigen Nullsignalkompensation mit beispielsweise 8-bit-Auflösung in der Vorkompensation und 10-bit-Auflösung im Zeilensignalprozessor 9 ist grösser als die eines einzigen, beispielsweise 16-bit-Wandlers.

Bei praktischen Untersuchungen konnte neben der Einhaltung der Streustrahlgrenzwerte die sichere Funktion des von einer Detektorzeile gebildeten Strahlendetektors 4 bis über 70° C nachgewiesen werden.

Die gestrichelt gezeichnete Schaltung kann für jeden Einzeldetektor 4a, 4b usw. vorhanden sein. Es ist aber auch möglich, für alle Einzeldetektoren 4a, 4b usw. eine gemeinsame Subtraktionsstufe 12 vorzusehen. Die Nullsignalwerte können auch in einem RAM abgelegt werden, das mindestens so viele Speicherplätze aufweist, wie Detektoren vorhanden sind. Die gestrichelte Schaltung kann also allen Einzeldetektoren 4a, 4b usw. gemeinsam sein.

## Ansprüche

1. Gepäckprüfanlage mit einer Transportstrecke (3a) für das Prüfgut (3), auf deren einer Seite ein Strahler (1) für durchdringende Strahlung und auf deren anderer Seite ein Strahlendetektor (4) angeordnet ist, der von einer Reihe von Einzeldetektoren (4a, 4b usw.) gebildet ist, sowie mit einer den Einzeldetektoren (4a, 4b usw.) nachgeschalteten Signalverarbeitungsschaltung (Fig. 3), **dadurch gekennzeichnet,** daß die Ausgänge der Einzeldetektoren (4a, 4b) an einer Subtraktionsstufe (12) mit einem Speicher (7) angeschlossen sind, in dem das jeweilige Nullsignal abspeicherbar und anschließend vom Gesamtsignal subtrahierbar ist.

2. Gepäckprüfanlage nach Anspruch 1, **dadurch gekennzeichnet,** daß für jeden Einzeldetektor (4a, 4b) je eine Subtraktionsstufe (12) vorhanden ist.

3. Gepäckprüfanlage nach Anspruch 1, **dadurch gekennzeichnet,** daß für alle Einzeldetektoren (4a, 4b) eine gemeinsame Subtraktionsstufe (12) vorhanden ist.

4. Gepäckprüfanlage nach Anspruch 1, **dadurch gekennzeichnet,** daß der Speicher (7) ein RAM ist, das mindestens so viele Speicherplätze aufweist, wie Einzeldetektoren (4a, 4b) vorhanden sind.

0 221 323

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 366 382 (A.F. KOTOWSKI)<br>* Spalte 1, Zeile 60 - Spalte 2, Zeile 17; Spalte 4, Zeilen 3-39; Spalte 5, Zeilen 21-40; Abbildungen 1,3,4 *<br><br>--- | 1,2 | G 01 N 23/04<br>G 01 V 5/00 |
| Y | PROCEEDINGS 1973 CARNAHAN CONFERENCE ON ELECTRONIC CRIME COUNTERMEASURES, 25. - 27. April 1973, Lexington, Kentucky, US, Seiten 9-15; A.A. STERK et al.: "Automatic airline baggage weapons detection system"<br>* Abschnitt: "2.3 System description"; Seite 13; Abbildung 7 *<br><br>--- | 1,2 | |
| A | US-A-3 808 444 (R.J. SCHNEEBERGER et al.)<br>* Spalte 7, Zeile 25 - Spalte 8, Zeile 44; Abbildung 9A * & DE-A-2 365 221<br><br>--- | 1 | RECHERCHIERTE SACHGEBIETE (Int. Cl.4)<br><br>G 01 N<br>G 01 V |
| A | US-A-4 383 327 (R.A. KRUGER)<br>* Spalte 1, Zeilen 43-65; Spalte 4, Zeilen 25-45 *<br><br>--- | 1 | |
| A | US-A-3 895 232 (R.J. SCHNEEBERGER)<br>* Spalte 3, Zeile 1 - Spalte 4, Zeile 25 *<br><br>---          -/- | 1 | |

Der vorliegende Recherchenbericht wurde für alle Patentansprüche erstellt.

| Recherchenort | Abschlußdatum der Recherche | Prüfer |
|---|---|---|
| DEN HAAG | 14-01-1987 | HORAK G.I. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 096 440 (NORTH AMERICAN PHILIPS CORPORATION) * Seite 3, Zeile 31 - Seite 7, Zeile 14; Abbildung 2 * | 1 | |
| | ----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 14-01-1987 | HORAK G.I. |